Europäisches Patentamt

European Patent Office

Office européen des brevets

(11) Veröffentlichungsnummer: **0 149 790**
**A2**

(12) **EUROPÄISCHE PATENTANMELDUNG**

(21) Anmeldenummer: **84115264.8**

(22) Anmeldetag: **12.12.84**

(51) Int. Cl.⁴: **C 09 J 7/04**
**C 09 J 3/02**

(30) Priorität: **23.12.83 DE 3346724**

(43) Veröffentlichungstag der Anmeldung:
**31.07.85 Patentblatt 85/31**

(84) Benannte Vertragsstaaten:
**AT BE CH DE FR GB IT LI LU NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Rugenstein, geb. Müller, Roswitha**
**Brahestrasse 10**
**D-4006 Erkrath(DE)**

(72) Erfinder: **Grünberger, Eberhard, Dr.**
**Gustav-Mahler-Strasse 12**
**D-4010 Hilden(DE)**

(54) **Trockenes Beschichtungsmaterial für zu verklebende Papiere u. Verfahren zum Beschichten von Tapetenrückseiten.**

(57) Verbessertes trockenes Beschichtungsmaterial für zu verklebende Papiere wie Tapetenrückseiten, bestehend aus
a) 100 Gewichtsteilen nativer Stärke und darauf bezogen
b) 80 bis 180 Gewichtsteilen wasserlöslicher Cellulose-derivate wie Methylcellulose mit etwa 15 bis 28 Gewichtsprozent Methoxylgruppen und gegebenenfalls 0,5 bis 10 Gewichtsprozent Ethoxyl- und/oder Propoxylgruppen
c) 30 bis 70 Gewichtsteilen Harnstoff und/oder Thioharnstoff,
d) 0,5 bis 5,0 Gewichtsteilen Polyacrylamid mit einem Molgewicht zwischen 0,5 und 10 Millionen und/oder Polyoxyethylen mit einem Molgewicht zwischen 0,5 und 1,5 Millionen,
e) 3 bis 10 Gewichtsteilen weiterer Hilfs- und Konservierungsmittel, durch welche bewirkt wird, daß sich beim Auflösen beziehungsweise Suspendieren der pH-Wert auf 5,5 bis 7,5 einstellt.

Croydon Printing Company Ltd.

**0149790**
**HENKEL KGaA**
ZR-FE/Patente

Henkelstraße 67

4000 Düsseldorf, den 26. Juli 1984          Dr.SchOe/Ge

Patentanmeldung

D 6962 EP

"Trockenes Beschichtungsmaterial für zu verklebende
Papiere und Verfahren zum Beschichten von Tapetenrückseiten"

---

Die vorliegende Erfindung betrifft ein Beschichtungsmaterial zur Klebausrüstung von Papier oder Pappe, insbesondere aber von Rückseiten von Tapeten und ein Verfahren
zum Beschichten von Tapetenrückseiten unter Anwendung
dieses Beschichtungsmaterials.

Es ist bekannt, Papiere dadurch auszurüsten, daß man sie
zunächst mit wäßrigen Kunststoffdispersionen, beispielsweise auf Basis von Copolymerisaten des Styrols mit Acrylsäure und/oder Butadien beschichtet, eventuell auch im
Gemisch mit Wachs- oder Paraffinemulsionen. Die so
vorbehandelten Tapetenrückseiten können dann mit Kleister,
zum Beispiel auf Basis wäßriger Methylcelluloselösungen,
bestrichen werden und lassen sich nach einer bestimmten
Quellzeit verkleben. Darüber hinaus ist es bekannt,
Tapetenrückseiten lediglich mit Methylcelluloselösungen
beziehungsweise mit wäßrigen Lösungen anderer Celluloseether oder sonstiger Hydrokolloide zu beschichten. Nach
dem Trocknen werden diese Papiere aufgerollt. Zum Gebrauch wird die auf Maß zugeschnittene Tapetenbahn in
Wasser getaucht. Die Beschichtung quillt dann sehr rasch
an und ist sofort klebefähig. Sie kann auf jeden entsprechend vorbereiteten Untergrund aufgebracht werden. An solche, an sich bekannten Systemen wird stets die Anforderung gestellt, daß sie nach Reaktivierung des Kleisters durch Wasser ein hohes Quellvolumen ergeben, weil sie beim Verkleben einer kleistervorbeschichteten Tapete auch bei rauhen Putzen als Untergrund eine gute Verschiebbarkeit beim Richten der Tapetenbahnen und gleichzeitig eine feste Verankerung der Tapeten auch bis in die Vertiefungen des Putzes gewährleisten müssen. Ein solch hohes Quellvolumen erzielt man normalerweise durch den Einsatz sehr hochmolekularer Hydrokolloide, vorzugsweise von Stärkederivaten. Diese hochmolekularen Hydrokolloide führen jedoch zu so hohen Lösungsviskositäten, daß sie mit den in Papier- oder Tapetenfabriken zur Verfügung stehenden Auftragsgeräten nicht verarbeitet werden können. So setzt man heute stark verdünnte Lösungen ein und nimmt dabei in Kauf, daß beim Trocknen größere Mengen an Wasser verdampft werden müssen. Das ist nicht nur energie-, sondern auch zeitaufwendig, weil die bisher bekannten Systeme temperaturempfindlich sind. Außerdem sind solche Hydrokolloid-Beschichtungen nicht ausreichend auf dem Trägerpapier verankert und zeigen nicht die für die Verschiebbarkeit der zu verklebenden Tapetenbahnen notwendige Gleitfähigkeit. Die hier erläuterten Probleme werden weitgehend gelöst durch trockene Beschichtungsmaterialien, die im wesentlichen bestehen aus

a) 100 Gewichtsteilen nativer Stärke und darauf bezogen

b) 80 bis 180 Gewichtsteilen Carboxymethylcellulose,

c) 30 bis 70 Gewichtsteilen Harnstoff und/oder Thioharnstoff,

d) 0,5 bis 5,0 Gewichtsteilen Polyacrylamid mit einem Molgewicht zwischen 0,5 und 10 Millionen und/oder Polyoxyethylen mit einem Molgewicht zwischen 0,5 und 1,5 Millionen

. . .

e)   3   bis   10   Gewichtsteilen weiterer Hilfs- und Konservierungsmittel, durch welche bewirkt wird, daß sich beim Auflösen beziehungsweise Suspendieren der pH-Wert auf 5,5 bis 7,5 einstellt.

Aufgabe der vorliegenden Erfindung war es, ein Beschichtungsmaterial zu entwickeln, das mit einem hohen Feststoffanteil angesetzt auf der Tapetenrückseite gut verankert ist und nach dem Tauchen der Tapetenbahn nicht ausgewaschen wird. Außerdem soll es der Quellschicht ein hohes Quellvolumen und die eine gute Verschiebbarkeit der Tapetenbahn garantierende Gleitfähigkeit geben.

Die wesentliche Aufgabe der vorliegenden Erfindung war es, ein solches Beschichtungsmaterial zu finden, das auf die Tapetenrückseiten aufgetragen, in trockenem Zustand Temperaturen bis etwa 240 $^{\circ}$C ohne Schädigung aushält. Diese Temperaturen werden häufig erreicht, um einen Plastisolauftrag, insbesondere aus einem PVC-Plastisol, auf der nicht mit dem Beschichtungsmaterial versehenen Tapetenseite zum Gelieren zu bringen. Es sollte also ein Beschichtungsmaterial gefunden werden, das in wäßriger Phase suspendiert trotz hoher Feststoffkonzentration eine relativ niedrige Viskosität - Vorbedingung für einen Luftbürstenauftrag - aufweist, und das zu einer Beschichtung führt, die kaum temperaturempfindlich ist, beim Tauchen in Wasser nicht ausgewaschen wird, sowie hohes Quellvolumen und ausreichende Gleitfähigkeit hat.

Diese Aufgabe wird erfindungsgemäß gelöst durch ein trockenes Beschichtungsmaterial, welches dadurch gekenn-

. . .

zeichnet ist, daß es anstelle der Carboxymethylcellulose nach der vorstehenden Zusammensetzung als wasserlösliche Celluloseether Methylcellulose mit 15 bis 28 Gewichtsprozent Methoxylgruppen und gegebenenfalls 0,5 bis 10 Gewichtsprozent Ethoxyl- und/oder Propoxylgruppen enthält. Sie sollte eine Viskosität in 2 %iger wäßriger Lösung zwischen 30 und 500 mPa·s nach Brookfield bei 25 $^{\circ}$C aufweisen.

Als Stärke kommen praktisch alle gängigen Sorten in Frage, insbesondere Kartoffel- und Maisstärke. Auch native Stärke aus anderen Getreidearten wie Weizen und dergleichen oder aus Tapiokawurzel können eingesetzt werden.

Als Harnstoff beziehungsweise Thioharnstoff sind alle technisch gängigen Qualitäten geeignet, sie sollten aber eine gute Rieselfähigkeit aufweisen.
Auch bei den geeigneten Polyacrylamidtypen handelt es sich um wohlbekannte Produkte. Unter ihnen sind jene bevorzugt, die durch Einpolymerisieren von bestimmten, Aminogruppen enthaltenden Comonomeren wie Dimethylaminoethylmethacrylat in geringer Menge schwach kationisch sind.

Als weitere Hilfsstoffe kommen in Frage Kieselsäure oder Farbpigmente, insbesondere hellfarbige wie Titandioxid und dergleichen, unter Umständen auch Farbstoffe in geringeren Mengen, um die Eigenfärbung der Beschichtung in wünschenswerter Weise zu beeinflussen. Auch können zur Steuerung des pH-Werts Salze wie Natrium- oder Kaliumhydrogensulfit oder Alkalihydrogen- beziehungsweise Alkalidehydrogenphosphate eingesetzt werden.

In den meisten Fällen durfte es auch ratsam sein, Konservierungsstoffe wie das Natriumsalz des p-Chlor-m-kresols sowie Natriumfluorid oder dergleichen zu verwenden.                                    ...

Die Herstellung der trockenen Beschichtungsmaterialien erfolgt in bekannten Mischern, wobei die trockenen Einzelkomponenten miteinander gemischt werden.

Zum Beschichten von Papieren beziehungsweise Tapetenrückseiten wird das trockene, pulverförmige Beschichtungsmaterial mittels eines schnellaufenden Rührers in Wasser dispergiert. Bevorzugt stellt man eine 10- bis 30 %ige Lösung und/oder Dispersion her. Beispielsweise hat eine 25 %ige wäßrige Dispersion beziehungsweise Lösung nach einer Zeit von etwa 3 Stunden je nach der Zusammensetzung eine Lösungsviskosität von 5 000 bis 150 000 mPa·s. Diese Ansätze können dann mittels Luftbürste, Rakel oder Walze auf das Trägerpapier, insbesondere die Tapeten aufgetragen werden. Die Menge an aufgetragenem Feststoff soll zwischen etwa 6 bis 30, insbesondere 10 bis 25 g, liegen. In der Praxis hat sich eine Beschichtung bewährt, bei der etwa 14 bis 18 g pro $m^2$ an Feststoff vorliegt. Anschließend werden dann die Papiere beziehungsweise Tapeten in üblicher Weise getrocknet. Das Trocknen erfolgt in bekannter Weise zwischen etwa 120 und 185 °C. Sind Tapeten nach dem erfindungsgemäßen Verfahren beschichtet worden, so können sie wie üblich weiterverarbeitet werden. Insbesondere kann man anschließend mit Plastisolen, beispielsweise auf Basis von PVC oder Polymethylmethacrylat, beschichten und gelieren. Verglichen mit anderen handelsüblichen Trockenbeschichtungsmaterialien ermöglicht das erfindungsgemäße Beschichtungsmaterial eine Energieeinsparung, da es mit hohem Feststoffgehalt aufgetragen werden kann und vergleichsweise weniger Wasser in die Suspension eingebracht wird.

...

**0149790**
HENKEL KGaA
ZR-FE/Patente

Es resultiert eine schnellere Fahrweise im Trockenkanal nach der Beschichtung, gegebenenfalls auch bei höherer Temperatur. Im Gegensatz zu anderen üblichen Tapetenrückseiten können im vorliegenden Fall nachträglich dünne Plastisole auf die Vorderseite aufgebracht und geliert werden. Dadurch erhält man besonders widerstandsfähige Tapetenvorderseiten, die leicht mit handelsüblichen Reinigungsmitteln gesäubert werden können.

Die nach dem erfindungsgemäßen Verfahren beschichteten Tapeten zeigen auch nach einer Temperaturbelastung beim Durchfahren eines Trockenkanals von 240 °C noch einen völlig unveränderten Abquetschwert. Der Abquetschwert ist ein Maß für das Quellvolumen. Ein hoher Wert bedeutet ein hohes Quellvolumen und damit ein gutes Eindringen des Kleisters bis in die Tiefen eines rauhen Putzuntergrundes und gute Verschiebbarkeit einer Tapete zum Ausrichten der Bahnen.

...

0149790

HENKEL KGaA
ZR-FE/Patente

## Beispiele

Es wurden 4 verschiedene Celluloseether eingesetzt, die in der nachfolgenden Tabelle 1 mit den Buchstaben A bis D gekennzeichnet sind und hinsichtlich des Gehalts an Methoxyl-, Propoxyl- und Ethoxylgruppen in Gewichtsprozent sowie der Viskosität nach Brookfield bei 20 UpM und 20°C charakterisiert sind.

### Tabelle 1

| Cellulose-ether | % Meth-oxyl | % Prop-oxyl | % Eth-oxyl | Viskosität 2 % in Wasser mPa·s |
|---|---|---|---|---|
| A | 28,9 | – | 1,6 | 80 |
| B | 21,6 | 7,8 | – | 100 |
| C | 26,8 | – | – | 40 |
| D | 26,8 | – | – | 400 |

In einem Mischer wurden dann unter Verwendung der verschiedenen Celluloseether A bis D homogene Mischungen hergestellt. In der nachfolgenden Tabelle 2 sind die Beschichtungsmaterialien 1 bis 4 bezüglich ihrer Zusammensetzung in Gewichtsprozent wiedergegeben.

## Tabelle 2

| Bestandteile | Material für Beschichtung | | | |
| --- | --- | --- | --- | --- |
| | 1 | 2 | 3 | 4 |
| Celluloseether A | 30 % | – | – | – |
| " B | – | 35 % | – | – |
| " C | – | – | 35 % | – |
| " D | – | – | – | 20 % |
| Kartoffelstärke, nativ | 48 % | 43 % | 43 % | 58 % |
| Harnstoff | 20 % | 20 % | 20 % | 20 % |
| Polyacrylamid, schwach anionen-aktive Mol-G. 4 Mio | 0,3 % | 0,3 % | 0,3 % | 0,3 % |
| Kieselsäure, kolloidale | 0,2 % | 0,2 % | 0,2 % | 0,2 % |
| p-Chlor-m-kresol, Na-Salz | 1,0 % | 1,0 % | 1,0 % | 1,0 % |
| Natriumfluorid | 0,5 % | 0,5 % | 0,5 % | 0,5 % |

Die Mischungen wurden mit Wasser von 18 $^{\circ}$dH angerührt und in Abhängigkeit von Celluseether A – D (Material 1 bis 4) beurteilt. Die Ergebnisse sind in der Tabelle 3 wiedergegeben, wobei in allen Fällen eine gute Anrührbarkeit und gute Verklebbarkeit auf Gipskarton gefunden wurde.

Alle 25 %igen Anrührungen hatten ein helles bis milchigweißes Aussehen.

Der zur Beurteilung der Beschichtungsmaterialien herangezogene Abquetschwert wurde wie folgt bestimmt. Papierstreifen von 3 x 20 cm (5 Stück) werden 10 sec. in Wasser (12 bis 15 $^{\circ}$C) untergetaucht. Anhaftendes

. . .

Wasser auf der nicht beschichteten Seite des Papierstreifens wird mit einem Tuch abgestrichen. Nach 1 Min.
Quellzeit wird der Streifen gewogen. Danach wird der
Kleister zwischen 2 Walzen (Liniendruck: circa 60 N/cm)
abgequetscht und erneut gewogen. Die Differenz zwischen
beiden Wägungen ergibt den Abquetschwert. Je größer
der Abquetschwert ist, desto besser ist die Quellfähigkeit des Kleisters.

## Tabelle 3

| Eigenschaften | Celluloseether / Material | | | |
|---|---|---|---|---|
| | A/1 | B/2 | C/3 | D/4 |
| Viskosität 25 %ige Lösung mPa·s  n.  3 Std. | 73 000 | 130 000 | 20 000 | 75 000 |
| n. 20 Std. | 84 000 | 132 000 | 26 000 | 90 000 |
| pH 25 %ige Lsg. | 9,4 | 9,6 | 9,6 | 9,6 |
| Auftrag auf Roh-papier g/m$^2$ | 17,4 | 16,4 | 16,1 | 17,6 |
| Trockentempera-tur °C | 120 | 120 | 120 | 120 |
| Abquetschwert g | 0,63 | 0,69 | 0,68 | 0,55 |

Weiter wurde die Beständigkeit des Abquetschwertes während 60 sec. bei verschiedenen Temperaturbelastungen
bestimmt und in der nachfolgenden Tabelle 4 wiedergegeben.

## Tabelle 4

| Temperatur | Celluloseether / Material | | | |
|---|---|---|---|---|
| | A/1 | B/2 | C/3 | D/4 |
| 120 °C | 0,63 | 0,69 | 0,68 | 0,55 |
| 180 °C | 0,64 | 0,68 | 0,67 | 0,57 |
| 240 °C | 0,64 | 0,68 | 0,69 | 0,54 |

. . .

**0149790**
HENKEL KGaA
ZR-FE/Patente

## Patentansprüche

1) Verbessertes trockenes Beschichtungsmaterial für zu verklebende Papiere und dergleichen, insbesondere für Tapetenrückseiten, bestehend aus

a) 100 Gewichtsteilen nativer Stärke und darauf bezogen

b) 80 bis 180 Gewichtsteilen wasserlöslicher Cellulosederivate

c) 30 bis 70 Gewichtsteilen Harnstoff und/oder Thioharnstoff,

d) 0,5 bis 5,0 Gewichtsteilen Polyacrylamid mit einem Molgewicht zwischen 0,5 und 10 Millionen und/oder Polyoxyethylen mit einem Molgewicht zwischen 0,5 und 1,5 Millionen,

e) 3 bis 10 Gewichtsteilen weiterer Hilfs- und Konservierungsmittel, durch welche bewirkt wird, daß sich beim Auflösen beziehungsweise Suspendieren der pH-Wert auf 5,5 bis 7,5 einstellt,

dadurch gekennzeichnet, daß als wasserlösliche Celluloseether Methylcellulose mit etwa 15 bis 28 Gewichtsprozent Methoxylgruppen und gegebenenfalls 0,5 bis 10 Gewichtsprozent Ethoxyl- und/oder Propoxylgruppen verwendet wird.

2) Verbessertes Beschichtungsmittel nach Anspruch 1, dadurch gekennzeichnet, daß die wasserlöslichen Methylcellulosen eine Viskosität in 2 %iger wäßriger Lösung zwischen 10 und 700 mPa·s nach Brookfield bei 20 °C (20 UpM) aufweisen.

...

3) Verfahren zum Beschichten von Tapetenrückseiten mit einem Material nach Ansprüchen 1 und 2, dadurch gekennzeichnet, daß man eine 10 bis 30 %ige Lösung und/oder Dispersion der trockenen Beschichtungsmaterialien nach Anspruch 1 in Wasser in an sich bekannter Weise mittels Luftbürste, Rakel oder Walze aufträgt und dann trocknet.

4) Verfahren zum Beschichten von Tapetenrückseiten nach Anspruch 3, dadurch gekennzeichnet, daß die Menge des erfindungsgemäß aufgebrachten Materials 6 bis 30 g/m$^2$, insbesondere 10 bis 25 g/m$^2$ beträgt.